# EUROPEAN PATENT SPECIFICATION

(11) **EP 3 786 744 B1**
(45) Date of publication and mention of the grant of the patent: **21.01.2026**
(21) Application number: 18859953.4
(22) Date of filing: 25.04.2018
(51) Int. Cl.: G07C 5/08, G07C 5/12, G06F 3/0483

(54) **METHOD AND SYSTEM FOR DISPLAYING A VEHICLE DATA STREAM**
VERFAHREN UND SYSTEM ZUR ANZEIGE EINES FAHRZEUGDATENSTROMS
PROCÉDÉ ET SYSTÈME D'AFFICHAGE D'UN FLUX DE DONNÉES DE VÉHICULE

(43) Date of publication of application: 03.03.2021
(73) Proprietor: Shenzhen Launch Software Co., Ltd., Shenzhen Guangdong 518000 (CN)
(72) Inventor: LIU, Jun, Guangdong 518000 (CN); DENG, Chunwu, Guangdong 518000 (CN)
(74) Representative: Lewis Silkin LLP
(86) International application number: PCT/CN2018/084450
(87) International publication number: WO 2019/205019

(56) References cited:
- CN-A- 102 981 501
- CN-A- 106 970 610
- CN-A- 106 993 056
- CN-A- 107 103 032
- US-A1- 2013 245 858
- US-A1- 2016 124 587
- US-B1- 8 884 749

## Description

### TECHNICAL FIELD

The present application pertains to the technical field of vehicle data stream displaying, and particularly, to a vehicle data stream displaying method and system.

### BACKGROUND

A vehicle data stream is referred to as data parameters exchanged between an electronic control unit and sensors and an actuator. A data stream recorded in the electronic control unit really reflects working voltages and statuses of the sensors and the actuator, and provides a basis for vehicle fault diagnosis. The data stream can be read only by dedicated diagnosis equipment.

For example, the US 8,884,749 B1 discloses a system of reporting vehicle telemetry to a vehicle operator or other user includes a device that removably attaches to the vehicle data port to monitor vehicle operating conditions and communicate with vehicle control modules. A user may configure the device without making permanent changes to the vehicle. The device understands and interprets vehicle communications protocols and can send diagnostic commands to the control modules to allow user-customized text or data to be shown or indicated using built-in or factory installed vehicle displays, lights, or sounds. The system permits showing of multiple user-configured pages of vehicle data or other information and provides real-time updates and configurable switchable profile and display settings. The device monitors factory installed vehicle buttons, switches, knobs, and sensors, and allows use of those items to perform customization and configuration tasks without the need for peripheral input accessories connected to the device. The device permits the user to configure vehicle operating parameter limits, make custom calculations, generate new information, and provide user-desired information to the vehicle operator or other user.

Furthermore, the US 2013/245858 A1 discloses a portable equipment for displaying a vehicle page, indicative of information relating to a vehicle corresponding to the portable equipment, on a screen of a display unit. It includes a reading request receiving device that receives a reading request manipulation for requesting to display the vehicle page; a position information acquisition device that acquires position information of the portable equipment and the vehicle; an item selection device that specifies an area, in which the position of the portable equipment and the vehicle is disposed, and selects an item of a top page of the display unit according to the area among multiple items; and a page display controller that controls the display unit to display the item of the top page on the screen.

Furthermore, the US 2016/124587 A1 discloses methods and system pertaining to displaying vehicle data parameters. A vehicle service tool with a display can receive vehicle data messages or signals from a vehicle to receive the vehicle data parameters. Some of the vehicle data parameters can be associated with a PID. The vehicle service tool can display vehicle data parameters thresholds and indicators when a received vehicle data parameters has breached a vehicle data parameters threshold. The vehicle service tool can determine being changed from a landscape orientation to a portrait orientation or vice versa and responsively change the presentation of vehicle data parameters graphs displayed by the display. The display can receive various inputs such as a drag-and-drop or pinch-and-expand input to alternatively change the presentation of the vehicle data parameters graphs being displayed. Changing a vehicle data parameters presentation of graphs can include resizing or repositioning one or more vehicle data parameters graph windows including a vehicle data parameters graph.

Reading the vehicle data stream can detect the working statuses of the sensors of the vehicle, and detect a working status of the vehicle. In addition, operation data of the vehicle may be set by using the data stream. The vehicle data stream may be used as input/output data of the electronic control unit, so that a maintenance worker can know a working condition of the vehicle at any time, and diagnose a fault of the vehicle in time.

### SUMMARY

Currently, there are more vehicle sensors, and there are more vehicle data streams. When a vehicle is diagnosed, sometimes, multiple data streams need to be selected from many vehicle data streams displayed by diagnosis equipment, and values of the selected multiple data streams are viewed. Because that when reading vehicle data streams, existing diagnosis equipment does not read the vehicle data streams according to data stream names, and during displaying, data stream titles are displayed out of order according to a chronological order of reading the data streams, a diagnosis worker cannot quickly view a target data stream. In addition, because that there are many data streams, and a diagnostic device needs to re-read data of many vehicle data streams during refreshing, a refreshing speed is slow.

In view of this, the present application provides a vehicle data stream displaying method and system to resolve a problem in related art that a diagnosis worker cannot quickly view a target data stream and a vehicle data stream refreshing speed is slow.

A first aspect of the present application provides a vehicle data stream displaying method according to claim

Based on the aforesaid technical solution, the step of paging displaying the at least one target data stream includes:
calculating a total quantity of pages according to a total quantity of obtained target data streams and a preset quantity of data streams displayed on each page;
allocating a target data stream correspondingly displayed on each page in an ascending order or in a descending order of a letter of a data stream title according to the preset quantity of the data streams displayed on each page; and
paging displaying the at least one target data stream according to an allocation result.

A second aspect of the present application provides a vehicle data stream displaying system according to claim 3.

Based on the aforesaid technical solution, the paging displaying unit is configured to:
calculate a total quantity of pages according to a total quantity of obtained target data streams and a preset quantity of data streams displayed on each page;
allocate, in an ascending order or in a descending order of a letter of a data stream title according to the preset quantity of the data streams displayed on each page, a target data stream correspondingly displayed on each page; and
paging display the at least one target data stream according to an allocation result.

A third aspect of the present application provides a computer readable storage medium, the computer readable storage medium stores a computer program, when the computer program is executed by a processor, the processor is configured to implement steps of the vehicle data stream displaying method according to any implementation of the first aspect.

### ADVANTAGEOUS EFFECTS

In the present application, the at least one vehicle data stream displayed out of order is sorted and displayed, so that the diagnosis worker can conveniently and quickly find a target data stream from many vehicle data streams. The target data stream is paging-refreshed, so that a data stream refreshing speed when the target data stream is viewed can be increased.

### BRIEF DESCRIPTION OF DRAWINGS

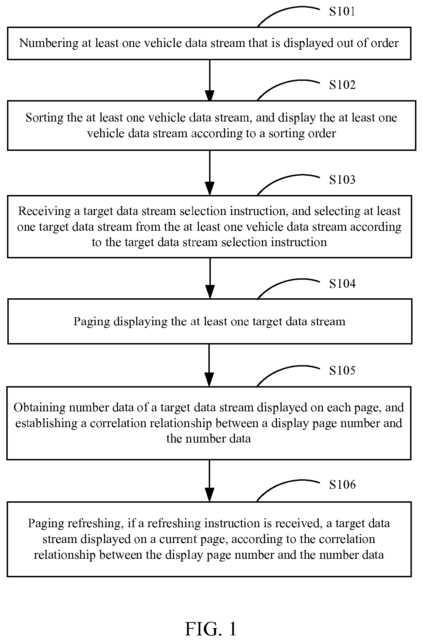

In order to describe the technical solutions in the embodiments of the present application more clearly, the accompanying drawings required for describing the embodiments or the prior art are briefly described in the following. FIG. 1 is a schematic flow diagram of implementing a vehicle data stream displaying method according to an embodiment of the present application;
FIG. 2 is a schematic flow diagram of implementing a vehicle data stream displaying method according to a specific implementation example of the present application;
FIG. 3 is a schematic structural diagram of a vehicle data stream displaying system according to an embodiment of the present application; and
FIG. 4 is a schematic structural diagram of a vehicle diagnostic device according to an embodiment of the present application.

### DESCRIPTION OF EMBODIMENTS

In the following description, for description rather than limitation, specific details such as a particular system structure and a technology are provided for thorough understanding of the present application. In other cases, detailed descriptions of a commonly-known system, vehicle diagnostic device, circuit, and method are omitted, so that the present application is described without being obscured by unnecessary details.

To describe the technical solutions of the present application, descriptions are given with reference to specific embodiments.

FIG. 1 is a schematic flow diagram of implementing a vehicle data stream displaying method according to an embodiment of the present application. The method is applied to a vehicle diagnostic device. As shown in FIG. 1, an implementation process of the method is described in detail as follows.

Step 101, numbering at least one vehicle data stream that is displayed out of order.

In this embodiment, the at least one vehicle data stream displayed out of order is referred to as at least one vehicle data stream obtained after the vehicle diagnostic device arranges and displays, according to a chronological vehicle data stream reading order or randomly, a vehicle data stream that is output by a vehicle electronic control unit and that is read within a preset time period.

In this embodiment, after the at least one vehicle data stream displayed out of order by the vehicle diagnostic device is obtained, the at least one vehicle data stream may be numbered with a figure according to a display location of the vehicle data stream. For example, the at least one vehicle data stream is sequentially numbered 1, 2, 3, ..., n according to the display location of the at least one vehicle data stream, where n is a positive integer equal to a quantity of the vehicle data streams.

Step 102, sorting the at least one vehicle data stream, and displaying the at least one vehicle data stream according to a sorting order.

In this embodiment, the at least one vehicle data stream is particularly sorted in an ascending order or in a descending order of a letter of a data stream title. The data stream title is a vehicle data stream name. The vehicle data stream name is in a Chinese form or an English form. When the vehicle data stream name is in the Chinese form, the at least one vehicle data stream is sorted in an ascending order or in a descending order of a capital of Pinyin of the vehicle data stream. When the vehicle data stream name is in the English form, the at least one vehicle data stream is sorted in an ascending order or a descending order of a capital of an English name of the vehicle data stream.

In this embodiment, because that the vehicle diagnostic device displays the at least one vehicle data stream in the ascending order or in the descending order of the letter of the data stream title, the read vehicle data stream is arranged in order instead of being arranged out of order, so that a user can conveniently and quickly find a target data stream from many vehicle data streams.

Step 103, receiving a target data stream selection instruction, and selecting at least one target data stream from the at least one vehicle data stream according to the target data stream selection instruction.

In this embodiment, the user may select, from the at least one vehicle data stream arranged in order and according to a name of the target data stream, the at least one target data stream needing to be viewed.

Preferably, a display interface of the vehicle diagnostic device is a touch display. The vehicle diagnostic device receives, by using the touch display, the target data stream selection instruction as input by the user. When a user touch operation is detected at a location of displaying a vehicle data stream on the touch display, and duration of the touch operation reaches a preset time threshold, it indicates that the vehicle data stream is selected as a target data stream. The user may select multiple data streams from many vehicle data streams as target data streams.

Step 104, paging displaying the at least one target data stream.

In this embodiment, the at least one target data stream is paging-displayed according to a total quantity of obtained target data streams and a preset quantity of data streams displayed on each page. Step 104 particularly includes:
calculating a total quantity of pages according to the total quantity of the obtained target data streams and the preset quantity of the data streams displayed on each page;
allocating a target data stream correspondingly displayed on each page in the ascending order or in the descending order of a letter of a data stream title according to the preset quantity of the data streams displayed on each page; and
paging displaying the at least one target data stream according to an allocation result.

Preferably, in this embodiment, the target data stream corresponding to each page is sorted and displayed in ascending order or descending order of a data stream title.

The preset quantity of the data streams displayed on each page may be a largest quantity of data streams that can be displayed on each page, and may be set or modified by the user according to a browsing habit of the user. The step of calculating a total quantity of pages according to the total quantity of the obtained target data streams and the preset quantity of the data streams displayed on each page particularly includes:
dividing the total quantity of the target data streams by the preset quantity of the data streams displayed on each page; and using the integer as the total quantity of the pages if a result is an integer; or adding one to an integral part of the result to obtain the total quantity of the pages if a result includes a decimal. For example, if the preset quantity of the data streams displayed on each page is 10, and the quantity of the target data streams is 95, the total quantity of the pages is 10, where only five target data streams are displayed on the last page, and 10 data streams are displayed on each of the other pages.

In this embodiment, when the at least one target data stream is paging- displayed, the target data stream displayed on each page is displayed in the ascending order or in the descending order of a letter of a data stream title, so that the user can conveniently view the data stream, and the user experience is further improved.

Step 105, obtaining number data of a target data stream displayed on each page, and establishing a correlation relationship between a display page number and the number data.

In this embodiment, after the at least one target data stream is paging-displayed, the number data of the target data stream displayed on each page needs to be obtained, the correlation relationship is established between the display page number and the number data, and the correlation relationship between the display page number and the number data is stored for subsequent invoking.

Step 106, refreshing a target data stream paging-displayed on a current page according to the correlation relationship between the display page number and the number data, if a refreshing instruction is received.

In this embodiment, step 106 includes:
reading a display page number of the current page, and obtaining, according to the display page number and the correlation relationship between the display page number and the number data, a number of the target data stream displayed on the current page if the refreshing instruction is received; and
requesting to read a corresponding vehicle data stream according to the number data of the target data stream displayed on the current page, and refreshing, by using the read vehicle data stream, the target data stream displayed on the current page.

Similarly, after a page turning instruction is received, number data of a displayed corresponding target data stream is selected according to a page number obtained after page turning, and then, the corresponding target data stream is read according to the number data.

In this embodiment, when various types of vehicle data streams are numbered, the vehicle diagnostic device records a correspondence between a type of a vehicle data stream and number data. The step of requesting to read a corresponding vehicle data stream according to the number data of the target data stream displayed on the current page particularly includes: determining, according to the number data of the target data stream displayed on the current page, a type of a vehicle data stream needing to be re-collected; and then, collecting the corresponding vehicle data stream according to the type of the vehicle data stream needing to be re-collected.

In this embodiment, when the refreshing instruction is received on the current page, only the target data stream displayed on the current page is re-obtained, and there is no need to re-obtain all target data streams. Therefore, a time required for data obtaining can be reduced, and a refreshing speed can be increased.

As can be learned from the above, in the vehicle data stream displaying method provided in this embodiment, the at least one vehicle data stream displayed out of order is sorted and displayed, so that a diagnosis worker can conveniently and quickly find a target data stream from many vehicle data streams. The target data stream is paging-refreshed, so that a data stream refreshing speed when the target data stream is viewed can be increased.

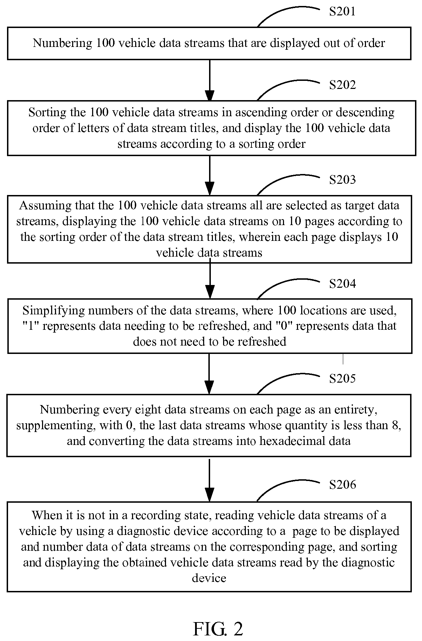

FIG. 2 is a schematic flow diagram of implementing a vehicle data stream displaying method according to a specific implementation example of the present application. The method is applied to a vehicle diagnostic device. As shown in FIG. 2, a specific implementation procedure of the method is described in detail as follows.

Step 201, numbering 100 vehicle data streams that are displayed out of order, and numbering the 100 vehicle data streams from 0 to 99 according to locations of the 100 vehicle data streams.

Step 202, sorting the 100 vehicle data streams in an ascending order or in a descending order of letters of data stream titles, and displaying the 100 vehicle data streams according to a sorting order. It is assumed that the order of the vehicle data streams after the vehicle data streams are arranged in the ascending order or in the descending order of the letters of the data stream titles is: the first vehicle data stream, the 11th vehicle data stream, the 21st vehicle data stream, the 31st vehicle data stream, ..., the 91st vehicle data stream, the second vehicle data stream, the 12th vehicle data stream, ..., the 92nd vehicle data stream, the third vehicle data stream, the 13th vehicle data stream, ..., the 93th vehicle data stream, ..., the 10th vehicle data stream, the 20th vehicle data stream, ..., the 100th vehicle data stream.

Step 203, assuming that the 100 vehicle data streams all are selected as target data streams, displaying the 100 vehicle data streams on 10 pages according to the sorting order of the data stream titles, wherein each page displays 10 vehicle data streams, and
location numbers of vehicle data streams displayed on the first page are: 0, 10, 20, 30, ..., 90;
location numbers of vehicle data streams displayed on the second page are: 1, 11, 21, 31, ..., 91;
location numbers of vehicle data streams displayed on the 10th page are: 9, 19, 29, 39, ..., 99.

Step 204, simplifying numbers of the data streams, wherein 100 locations are used, "1" represents data needing to be refreshed, and "0" represents data that does not need to be refreshed. That is:
data needing to be refreshed on the first page is (values of data streams whose location numbers are 0, 10, 20, 30, ..., 90 are 1, and values of the other bits are 0): 10000000001000000000100000000010000000001000000000100000000010000000001000000 00010000000001000000000;
data needing to be refreshed on the second page is (values of data streams whose location numbers are 1, 11, 21, 31, ..., 91 are 1, and values of the other bits are 0): 01000000000100000000010000000001000000000100000000010000000001000000000100000 00001000000000100000000; ...
data needing to be refreshed on the tenth page is (values of data streams whose location numbers are 9, 19, 29, 39, ..., 99 are 1, and values of the other bits are 0): 00000000010000000001000000000100000000010000000001000000000100000000010000000 00100000000010000000001.

Step 205, numbering every eight data streams on each page as an entirety, supplement, with 0, the last data streams whose quantity is less than 8, and converting the data streams into hexadecimal data. For example:
10000000 00100000 00001000 00000010 00000000 10000000 00100000 00001000 00000010 00000000 10000000 00100000 00000000 (the last four zeros are supplemented data) on the first page is converted into 0x80, 0x20, 0x08, 0x02, 0x00, 0x80, 0x20, 0x08, 0x02, 0x00, 0x80, 0x20, 0x00;
01000000 00010000 00000100 00000001 00000000 01000000 00010000 00000100 00000001 00000000 01000000 00010000 00000000 (the last four zeros are supplemented data) on the second page is converted into 0x40, 0x10, 0x04, 0x01, 0x00, 0x40, 0x10, 0x04, 0x01, 0x00, 0x40, 0x10, 0x00; ....
00000000 01000000 00010000 00000100 00000001 00000000 01000000 00010000 00000100 00000001 00000000 01000000 00010000 (the last four zeros are supplemented data) on the tenth page is converted into 0x00, 0x40, 0x10, 0x04, 0x01, 0x00, 0x40, 0x10, 0x04, 0x01, 0x00, 0x40, 0x10.

Step 206, when it is not in a recording state, reading data of vehicle data streams of a vehicle by using a diagnostic device according to a page to be displayed and number data of data streams on the corresponding page, and sorting and displaying the obtained vehicle data streams read by the diagnostic device. During page turning, a page number is changed, and number data of a data stream is changed. The diagnostic device requests, according to the number data of the data stream, a data stream needing to be requested on the corresponding page.

As can be learned from the above, in the vehicle data stream displaying method provided in this embodiment, the vehicle data streams displayed out of order are sorted and displayed, so that a diagnosis worker can conveniently and quickly find a target data stream from many vehicle data streams. The target data stream is paging-refreshed, so that a data stream refreshing speed when the target data stream is viewed can be increased.

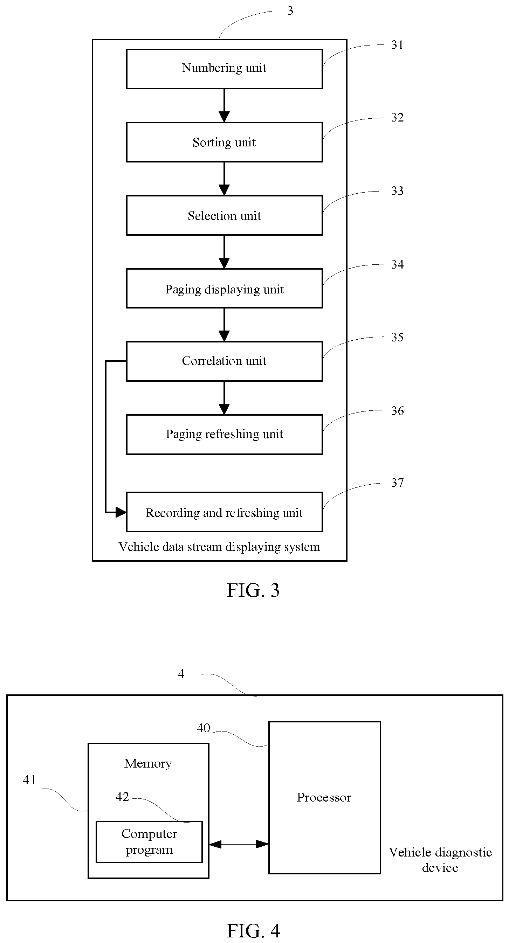

FIG. 3 is a schematic structural diagram of a vehicle data stream displaying system according to an embodiment of the present application. The system is applied to a vehicle diagnostic device. For the convenience of description, only a part related to this embodiment is shown.

As shown in FIG. 3, a vehicle data stream displaying system 3 provided in this embodiment includes:
a numbering unit 31 configured to number at least one vehicle data stream that is displayed out of order;
a sorting unit 32 configured to: sort the at least one vehicle data stream, and display the at least one vehicle data stream according to a sorting order;
a selection unit 33 configured to: receive a target data stream selection instruction, and select at least one target data stream from the at least one vehicle data stream according to the target data stream selection instruction;
a paging displaying unit 34 configured to paging display the at least one target data stream;
a correlation unit 35 configured to: obtain number data of a target data stream displayed on each page, and establish a correlation relationship between a display page number and the number data; and
a paging refreshing unit 36 configured to: refresh a target data stream paging-displayed on a current page, according to the correlation relationship between the display page number and the number data if a refreshing instruction is received.

In one embodiment, the paging refreshing unit 36 is configured to
read a display page number of the current page, and obtain a number of the target data stream displayed on the current page according to the display page number and the correlation relationship between the display page number and the number data, if the refreshing instruction is received; and
request to read a corresponding vehicle data stream according to the number data of the target data stream displayed on the current page, and refresh the target data stream displayed on the current page by using the read vehicle data stream.

In one embodiment, the paging displaying unit 34 is particularly configured to:
calculate a total quantity of pages according to a total quantity of obtained target data streams and a preset quantity of data streams displayed on each page;
allocate, in an ascending order or in a descending order of a letter of a data stream title according to the preset quantity of the data streams displayed on each page, a target data stream correspondingly displayed on each page; and
paging display the at least one target data stream according to an allocation result.

It should be noted that because that the units of the system provided in this embodiment of the present application are based on a same concept as the method embodiment of the present application, technical effects thereof are the same as those of the method embodiment of the present application. For specific content, refer to the descriptions in the method embodiment of the present application, and details are not described herein again.

As can be learned from the above, in the vehicle data stream displaying system provided in this embodiment, the vehicle data stream displayed out of order is sorted and displayed, so that a diagnosis worker can conveniently and quickly find a target data stream from many vehicle data streams. The target data stream is paging refreshed, so that a data stream refreshing speed when the target data stream is viewed can be increased.

It should be understood that sequence numbers of the steps in this embodiment do not represent an execution sequence. The execution sequence of the processes should be determined according to functions and internal logic. The sequence numbers should not constitute any limitation to an implementation process of this embodiment of the present application.

FIG. 4 is a schematic structural diagram of a vehicle diagnostic device according to an embodiment of the present application. As shown in FIG. 4, a vehicle diagnostic device 4 in this embodiment includes a processor 40, a memory 41, and a computer program 42 stored in the memory 41 and executable on the processor 40. When the processor 40 executes the computer program 42, the processor 40 implements functions of the units in the vehicle diagnostic device embodiment, for example, functions of the module 31 to the module 36 shown in FIG. 3. Alternatively, when the processor 40 executes the computer program 42, the processor 40 implements the steps in the method embodiment, for example, step 101 to step 104 shown in FIG. 1.

For example, when the processor 40 executes the computer program 42, the processor 40 implements the following steps of:
numbering at least one vehicle data stream that is displayed out of order;
sorting the at least one vehicle data stream, and displaying the at least one vehicle data stream according to a sorting order;
receiving a target data stream selection instruction, and selecting at least one target data stream from the at least one vehicle data stream according to the target data stream selection instruction;
paging displaying the at least one target data stream;
obtaining number data of a target data stream displayed on each page, and establishing a correlation relationship between a display page number and the number data; and
refreshing a target data stream paging-displayed on a current page according to the correlation relationship between the display page number and the number data, if a refreshing instruction is received,.

For example, when the processor 40 executes the computer program 42, the processor 40 implements the following steps of:
reading a display page number of the current page, and obtaining a number of the target data stream displayed on the current page according to the display page number and the correlation relationship between the display page number and the number data, if the refreshing instruction is received; and
requesting to read a corresponding vehicle data stream according to the number data of the target data stream displayed on the current page, and refreshing the target data stream displayed on the current page by using the read vehicle data stream.

For example, when the processor 40 executes the computer program 42, the processor 40 implements the following steps of:
calculating a total quantity of pages according to a total quantity of obtained target data streams and a preset quantity of data streams displayed on each page;
allocating a target data stream correspondingly displayed on each page in an ascending order or in a descending order of a letter of a data stream title according to the preset quantity of data streams displayed on each page; and
paging displaying the at least one target data stream according to an allocation result.

The vehicle diagnostic device 4 may include but is not limited to the processor 40 and the memory 41. The ordinary skilled one in the art may understand that FIG. 4 only shows an example of the vehicle diagnostic device, but is not intended to limit the vehicle diagnostic device 4. The vehicle diagnostic device 4 may include more or fewer components than those shown in the figure, or some components may be combined, or the vehicle diagnostic device 4 may include different components. For example, the vehicle diagnostic device 4 may further include an input/output device, a network access device, a bus, and the like.

The processor 40 may be a central processing unit (central processing unit, CPU), or the processor may be another general purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or transistor logic device, a discrete hardware component, or the like. The general purpose processor may be a microprocessor or the processor may be any normal processor, or the like.

The memory 41 may be an internal storage unit of the vehicle diagnostic device, for example, a hard disk or a memory of the vehicle diagnostic device. The memory 41 may alternatively be an external storage device of the vehicle diagnostic device, for example, a plug-connected hard disk, a smart media card (Smart Media Card, SMC), a secure digital (Secure Digital, SD) card, or a flash card (Flash Card) disposed on the vehicle diagnostic device. Further, the memory 41 may alternatively include both the internal storage unit and the external storage device of the vehicle diagnostic device. The memory 41 is configured to store the computer program and another program and data needed by the terminal. The memory 41 may be further configured to temporarily store data that is output or that is to be output.

The ordinary skilled one in the art may be aware of that, for the convenience and brevity of descriptions, only divisions of the foregoing function units are used as an example for description. In an actual application, the functions may be allocated to different function units or modules for completion according to needs. In other words, an internal structure of the vehicle diagnostic device is divided into different function units or modules, to complete all or some functions described above. The function units or modules in the embodiments may be integrated into one processing unit, or the units may exist physically and independently, or at least two units are integrated into one unit. The integrated unit may be implemented in a form of hardware, or in a form of a software function unit. In addition, specific names of the function units or modules are merely used for distinguishing, but are not used to limit the protection scope of the present application. For specific working processes of the units or modules in the system, reference can be made to the corresponding processes in the method embodiment described above, and details are not repeatedly described herein.

In the foregoing embodiments, descriptions of the embodiments have emphases, and for a part not described or recorded in an embodiment, reference can be made to related descriptions of another embodiment.

In the embodiments provided in the present application, it should be understood that the disclosed vehicle diagnosis system, device, and method may be implemented in other manners. In addition, the function units in the embodiments of the present application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer readable storage medium. Based on such understanding, all or some procedures in the method embodiment of the present application may be completed by a computer program instructing related hardware. The computer program may be stored in a computer readable storage medium. When the computer program is executed by the processor, the steps in the method embodiment may be implemented.

The computer program includes computer program code. The computer program code may be in a form of source code, a form of object code, a form of an executable file or some intermediate forms, or the like. The computer readable medium may include any entity or vehicle diagnostic device, recording medium, USB flash drive, movable hard disk, magnetic disk, optical disc, computer memory, read-only memory (Read-Only Memory, ROM), random access memory (Random Access Memory, RAM), electrical carrier signal, telecommunications signal, software distribution medium, and the like that can carry the computer program code. It should be noted that content included in the computer readable medium may be added or reduced appropriately according to requirements of legislation and patent practice within the jurisdiction. For example, within some jurisdictions, the computer readable medium does not include an electrical carrier signal or a telecommunications signal according to the legislation and the patent practice.

The foregoing embodiments are merely used for describing the technical solutions of the present application, rather than limiting the present application.

## Claims

1. A vehicle data stream displaying method, wherein the method comprises:
(S101) numbering at least one vehicle data stream that is displayed out of order, and recording a correspondence relationship between a type of the vehicle data stream and number data;
(S102) sorting the at least one vehicle data stream, and displaying the at least one vehicle data stream according to an order of the at least one vehicle data stream that has been sorted;
(S103) receiving a target data stream selection instruction, and selecting at least one target data stream from the at least one vehicle data stream according to the target data stream selection instruction;
(S104) paging displaying the at least one target data stream;
(S105) obtaining number data of a target data stream displayed on each page, establishing a correlation relationship between a display page number and the number data, and storing the correlation relationship between the display page number and the number data; and
(S106) paging refreshing a target data stream displayed on a current page, according to the correlation relationship between the display page number and the number data if a refreshing instruction is received;
the step of (S106) paging refreshing a target data stream displayed on a current page, according to the correlation relationship between the display page number and the number data if a refreshing instruction is received, comprises:
reading a display page number of the current page if the refreshing instruction is received, and then obtaining number data of the target data stream displayed on the current page according to the display page number and the correlation relationship between the display page number and the number data; and
requesting to read a corresponding vehicle data stream according to the number data of the target data stream displayed on the current page, and refreshing the target data stream displayed on the current page by using the read vehicle data stream;
wherein the step of requesting to read a corresponding vehicle data stream according to the number data of the target data stream displayed on the current page comprises:
determining a type of a vehicle data stream needing to be re-collected according to the number data of the target data stream displayed on the current page; and
collecting the corresponding vehicle data stream according to the type of the vehicle data stream needing to be re-collected.

2. The vehicle data stream displaying method according to claim 1, wherein the step (S104) of paging displaying the at least one target data stream particularly comprises:
calculating a total quantity of pages according to a total quantity of obtained target data streams and a preset quantity of data streams displayed on each page;
allocating, in an ascending order or a descending order of a letter of a data stream title according to the preset quantity of the data streams displayed on each page, a target data stream correspondingly displayed on each page; and
paging displaying the at least one target data stream according to an allocation result.

3. A vehicle data stream displaying system (3), wherein the vehicle data stream displaying system (3) comprises:
a numbering unit (31) configured to number at least one vehicle data stream that is displayed out of order, wherein a correspondence relationship between a type of the vehicle data stream and number data is recorded when various types of vehicle data streams are numbered;
a sorting unit (32) configured to: sort the at least one vehicle data stream, and display the at least one vehicle data stream according to an order of the at least one vehicle data stream that has been sorted;
a selection unit (33) configured to: receive a target data stream selection instruction, and select at least one target data stream from the at least one vehicle data stream according to the target data stream selection instruction;
a paging displaying unit (34) configured to paging display the at least one target data stream;
a correlation unit (35) configured to: obtain number data of a target data stream displayed on each page, establish a correlation relationship between a display page number and the number data, and store the correlation relationship between the display page number and the number data; and
a paging refreshing unit (36) configured to: paging refresh a target data stream displayed on a current page according to the correlation relationship between the display page number and the number data, if a refreshing instruction is received;
the paging refreshing unit (36) is configured to:
read a display page number of the current page, and obtain a number of the target data stream displayed on the current page according to the display page number and the correlation relationship between the display page number and the number data, if the refreshing instruction is received; and
request to read a corresponding vehicle data stream according to the number data of the target data stream displayed on the current page, and refresh the target data stream displayed on the current page by using the read vehicle data stream.

4. The vehicle data stream displaying system (3) according to claim 3, wherein the paging displaying unit (34) is configured to:
calculate a total quantity of pages according to a total quantity of obtained target data streams and a preset quantity of data streams displayed on each page;
allocate a target data stream correspondingly displayed on each page in an ascending order or a descending order of a letter of a data stream title according to the preset quantity of the data streams displayed on each page; and
paging display the at least one target data stream according to an allocation result.

5. A computer readable storage medium, the computer readable storage medium stores a computer program (42), wherein when the computer program (42) is executed by a processor (40), the processor (40) is configured to implement steps in the vehicle data stream displaying method according to any one of claims 1 to 2.

## Patentansprüche

1. Verfahren zum Anzeigen eines Fahrzeugdatenstroms, wobei das Verfahren umfasst:
(S101) Nummerieren mindestens eines Fahrzeugdatenstroms, der nicht in der richtigen Reihenfolge angezeigt wird, und Aufzeichnen einer Korrespondenzbeziehung zwischen einem Typ des Fahrzeugdatenstroms und Nummerndaten;
(S102) Sortieren des mindestens einen Fahrzeugdatenstroms und Anzeigen des mindestens einen Fahrzeugdatenstroms gemäß einer Reihenfolge des mindestens einen Fahrzeugdatenstroms, der sortiert worden ist;
(S103) Empfangen einer Zieldatenstrom-Auswahlanweisung und Auswählen mindestens eines Zieldatenstroms aus dem mindestens einen Fahrzeugdatenstrom gemäß der Zieldatenstrom-Auswahlanweisung;
(S104) paginiertes Anzeigen des mindestens einen Zieldatenstroms;
(S105) Erhalten von Nummerndaten eines Zieldatenstroms, der auf jeder Seite angezeigt wird, Herstellen einer Korrelationsbeziehung zwischen einer Anzeigeseitennummer und den Nummerndaten und Speichern der Korrelationsbeziehung zwischen der Anzeigeseitennummer und den Nummerndaten; und
(S106) paginiertes Auffrischen eines Zieldatenstroms, der auf einer aktuellen Seite angezeigt wird, gemäß der Korrelationsbeziehung zwischen der Anzeigeseitennummer und den Nummerndaten, falls eine Auffrischungsanweisung empfangen wird;
wobei der Schritt (S106) des paginierten Auffrischens eines Zieldatenstroms, der auf einer aktuellen Seite angezeigt wird, gemäß der Korrelationsbeziehung zwischen der Anzeigeseitennummer und den Nummerndaten, falls eine Auffrischungsanweisung empfangen wird, umfasst:
Lesen einer Anzeigeseitennummer der aktuellen Seite, falls die Auffrischungsanweisung empfangen wird, und danach Erhalten von Nummerndaten des Zieldatenstroms, der auf der aktuellen Seite angezeigt wird, gemäß der Anzeigeseitennummer und der Korrelationsbeziehung zwischen der Anzeigeseitennummer und den Nummerndaten; und
Anfordern, einen entsprechenden Fahrzeugdatenstrom gemäß den Nummerndaten des Zieldatenstroms, der auf der aktuellen Seite angezeigt wird, zu lesen, und Auffrischen des Zieldatenstroms, der auf der aktuellen Seite angezeigt wird, unter Verwendung des gelesenen Fahrzeugdatenstroms;
wobei der Schritt des Anforderns, einen entsprechenden Fahrzeugdatenstrom gemäß den Nummerndaten des Zieldatenstroms, der auf der aktuellen Seite angezeigt wird, zu lesen, umfasst:
Bestimmen eines Typs eines Fahrzeugdatenstroms, der erneut erfasst werden muss, gemäß den Nummerndaten des Zieldatenstroms, der auf der aktuellen Seite angezeigt wird; und
Erfassen des entsprechenden Fahrzeugdatenstroms gemäß dem Typ des Fahrzeugdatenstroms, der erneut erfasst werden muss.

2. Verfahren zum Anzeigen eines Fahrzeugdatenstroms nach Anspruch 1, wobei Schritt (S104) des paginierten Anzeigens des mindestens einen Zieldatenstroms insbesondere umfasst:
Berechnen einer Gesamtzahl von Seiten gemäß einer Gesamtzahl von erhaltenen Zieldatenströmen und einer voreingestellten Anzahl von Datenströmen, die auf jeder Seite angezeigt werden;
Zuweisen, in einer aufsteigenden Reihenfolge oder einer absteigenden Reihenfolge eines Buchstabens eines Datenstromnamens gemäß der voreingestellten Anzahl der auf jeder Seite angezeigten Datenströme, eines Zieldatenstroms, der entsprechend auf jeder Seite angezeigt wird; und
paginiertes Anzeigen des mindestens einen Zieldatenstroms gemäß einem Zuweisungsergebnis.

3. System zum Anzeigen eines Fahrzeugdatenstroms (3), wobei das System zum Anzeigen eines Fahrzeugdatenstroms (3) umfasst:
eine Nummeriereinheit (31), die dafür ausgelegt ist, mindestens einen Fahrzeugdatenstrom zu nummerieren, der nicht in der richtigen Reihenfolge angezeigt wird, wobei eine Korrespondenzbeziehung zwischen einem Typ des Fahrzeugdatenstroms und Nummerndaten aufgezeichnet wird, wenn verschiedene Typen von Fahrzeugdatenströmen nummeriert werden;
eine Sortiereinheit (32), die für Folgendes ausgelegt ist: Sortieren des mindestens einen Fahrzeugdatenstroms und Anzeigen des mindestens einen Fahrzeugdatenstroms gemäß einer Reihenfolge des mindestens einen Fahrzeugdatenstroms, der sortiert worden ist;
eine Auswahleinheit (33), die für Folgendes ausgelegt ist: Empfangen einer Zieldatenstrom-Auswahlanweisung und Auswählen mindestens eines Zieldatenstroms aus dem mindestens einen Fahrzeugdatenstrom gemäß der Zieldatenstrom-Auswahlanweisung;
eine Einheit zum paginierten Anzeigen (34), die dafür ausgelegt ist, den mindestens einen Zieldatenstrom paginiert anzuzeigen;
eine Korrelationseinheit (35), die für Folgendes ausgelegt ist: Erhalten von Nummerndaten eines Zieldatenstroms, der auf jeder Seite angezeigt wird, Herstellen einer Korrelationsbeziehung zwischen einer Anzeigeseitennummer und den Nummerndaten und Speichern der Korrelationsbeziehung zwischen der Anzeigeseitennummer und den Nummerndaten; und
eine Einheit zum paginierten Auffrischen (36), die für Folgendes ausgelegt ist: paginiertes Auffrischen eines Zieldatenstroms, der auf einer aktuellen Seite angezeigt wird, gemäß der Korrelationsbeziehung zwischen der Anzeigeseitennummer und den Nummerndaten, falls eine Auffrischungsanweisung empfangen wird;
wobei die Einheit zum paginierten Auffrischen (36) für Folgendes ausgelegt ist:
Lesen einer Anzeigeseitennummer der aktuellen Seite und Erhalten einer Nummer des Zieldatenstroms, der auf der aktuellen Seite angezeigt wird, gemäß der Anzeigeseitennummer und der Korrelationsbeziehung zwischen der Anzeigeseitennummer und den Nummerndaten, falls die Auffrischungsanweisung empfangen wird; und
Anfordern, einen entsprechenden Fahrzeugdatenstrom gemäß den Nummerndaten des Zieldatenstroms, der auf der aktuellen Seite angezeigt wird, zu lesen, und Auffrischen des Zieldatenstroms, der auf der aktuellen Seite angezeigt wird, unter Verwendung des gelesenen Fahrzeugdatenstroms.

4. System zum Anzeigen eines Fahrzeugdatenstroms (3) nach Anspruch 3, wobei die Einheit zum paginierten Anzeigen (34) für Folgendes ausgelegt ist:
Berechnen einer Gesamtzahl von Seiten gemäß einer Gesamtzahl von erhaltenen Zieldatenströmen und einer voreingestellten Anzahl von Datenströmen, die auf jeder Seite angezeigt werden;
Zuweisen eines Zieldatenstroms, der entsprechend auf jeder Seite angezeigt wird, in einer aufsteigenden Reihenfolge oder einer absteigenden Reihenfolge eines Buchstabens eines Datenstromnamens gemäß der voreingestellten Anzahl der Datenströme, die auf jeder Seite angezeigt werden; und
paginiertes Anzeigen des mindestens einen Zieldatenstroms gemäß einem Zuweisungsergebnis.

5. Computerlesbares Speichermedium, wobei das computerlesbare Speichermedium ein Computerprogramm (42) speichert, wobei, wenn das Computerprogramm (42) von einem Prozessor (40) ausgeführt wird, der Prozessor (40) dafür ausgelegt ist, Schritte in dem Verfahren zum Anzeigen eines Fahrzeugdatenstroms nach einem der Ansprüche 1 bis 2 zu implementieren.

## Revendications

1. Procédé d'affichage de flux de données de véhicule, le procédé comprenant :
(S101) la numérotation d'au moins un flux de données de véhicule affiché dans le désordre, et l'enregistrement d'une relation de correspondance entre un type du flux de données de véhicule et des données de numéro ;
(S102) le tri de l'au moins un flux de données de véhicule, et l'affichage de l'au moins un flux de données de véhicule selon un ordre de l'au moins un flux de données de véhicule ayant été trié ;
(S103) la réception d'une instruction de sélection de flux de données cible, et la sélection d'au moins un flux de données cible parmi l'au moins un flux de données de véhicule selon l'instruction de sélection de flux de données cible ;
(S104) l'affichage paginé de l'au moins un flux de données cible ;
(S105) l'obtention de données de numéro d'un flux de données cible affiché sur chaque page, l'établissement d'une relation de corrélation entre un numéro de page d'affichage et les données de numéro, et le stockage de la relation de corrélation entre le numéro de page d'affichage et les données de numéro ; et
(S106) le rafraîchissement paginé d'un flux de données cible affiché sur une page courante, selon la relation de corrélation entre le numéro de page d'affichage et les données de numéro, en cas de réception d'une instruction de rafraîchissement ;
l'étape de (106) rafraîchissement paginé d'un flux de données cible affiché sur une page courante, selon la relation de corrélation entre le numéro de page d'affichage et les données de numéro, en cas de réception d'une instruction de rafraîchissement comprenant :
la lecture d'un numéro de page d'affichage de la page courante, en cas de réception de l'instruction de rafraîchissement, puis l'obtention de données de numéro du flux de données cible affiché sur la page courante selon le numéro de page d'affichage et la relation de corrélation entre le numéro de page d'affichage et les données de numéro ; et
la demande de lecture d'un flux de données de véhicule correspondant selon les données de numéro du flux de données cible affiché sur la page courante, et le rafraîchissement du flux de données cible affiché sur la page courante au moyen du flux de données de véhicule lu ;
l'étape de demande de lecture d'un flux de données de véhicule correspondant selon les données de numéro du flux de données cible affiché sur la page courante comprenant :
la détermination d'un type d'un flux de données de véhicule devant être à nouveau collecté selon les données de numéro du flux de données cible affiché sur la page courante ; et
la collecte du flux de données de véhicule correspondant selon le type du flux de données de véhicule devant être à nouveau collecté.

2. Procédé d'affichage de flux de données de véhicule selon la revendication 1, dans lequel l'étape (S104) d'affichage paginé de l'au moins un flux de données cible comprend plus particulièrement :
le calcul d'une quantité totale de pages selon une quantité totale de flux de données cibles obtenus et une quantité prédéfinie de flux de données affichés sur chaque page ;
l'attribution, dans un ordre croissant ou un ordre décroissant d'une lettre d'un titre de flux de données selon la quantité prédéfinie des flux de données affichés sur chaque page, d'un flux de données cible affiché de manière correspondante sur chaque page ; et
l'affichage paginé de l'au moins un flux de données cible selon un résultat d'attribution.

3. Système (3) d'affichage de flux de données de véhicule, le système (3) d'affichage de flux de données de véhicule comprenant :
une unité de numérotation (31) configurée pour numéroter au moins un flux de données de véhicule affiché dans le désordre, une relation de correspondance entre un type du flux de données de véhicule et des données de numéro étant enregistrée lorsque divers types de flux de données de véhicule sont numérotés ;
une unité de tri (32) configurée pour : trier l'au moins un flux de données de véhicule, et afficher l'au moins un flux de données de véhicule selon un ordre de l'au moins un flux de données de véhicule ayant été trié ;
une unité de sélection (33) configurée pour : recevoir une instruction de sélection de flux de données cible, et sélectionner au moins un flux de données cible parmi l'au moins un flux de données de véhicule selon l'instruction de sélection de flux de données cible ;
une unité d'affichage paginé (34) configurée pour afficher de manière paginée l'au moins un flux de données cible ;
une unité de corrélation (35) configurée pour : obtenir des données de numéro d'un flux de données cible affiché sur chaque page, établir une relation de corrélation entre un numéro de page d'affichage et les données de numéro, et stocker la relation de corrélation entre le numéro de page d'affichage et les données de numéro ; et
une unité de rafraîchissement paginé (36) configurée pour : rafraîchir de manière paginée un flux de données cible affiché sur une page courante selon la relation de corrélation entre le numéro de page d'affichage et les données de numéro, en cas de réception d'une instruction de rafraîchissement ;
l'unité de rafraîchissement paginé (36) étant configurée pour :
lire un numéro de page d'affichage de la page courante, et obtenir un numéro du flux de données cible affiché sur la page courante selon le numéro de page d'affichage et la relation de corrélation entre le numéro de page d'affichage et les données de numéro, en cas de réception de l'instruction de rafraîchissement ; et
demander la lecture d'un flux de données de véhicule correspondant selon les données de numéro du flux de données cible affiché sur la page courante, et rafraîchir le flux de données cible affiché sur la page courante au moyen du flux de données de véhicule lu.

4. Système (3) d'affichage de flux de données de véhicule selon la revendication 3, dans lequel l'unité d'affichage paginé (34) est configurée pour :
calculer une quantité totale de pages selon une quantité totale de flux de données cibles obtenus et une quantité prédéfinie de flux de données affichés sur chaque page ; attribuer un flux de données cible affiché de manière correspondante sur chaque page dans un ordre croissant ou un ordre décroissant d'une lettre d'un titre de flux de données selon la quantité prédéfinie des flux de données affichés sur chaque page ; et
afficher de manière paginée l'au moins un flux de données cible selon un résultat d'attribution.

5. Support de stockage lisible par ordinateur, le support de stockage lisible par ordinateur stockant un programme d'ordinateur (42) ; lorsque le programme d'ordinateur (42) est exécuté par un processeur (40), le processeur (40) étant configuré pour mettre en œuvre les étapes du procédé d'affichage de flux de données de véhicule selon l'une quelconque des revendications 1 à 2.
